Europäisches Patentamt

European Patent Office

Office européen des brevets

(11) Publication number: **0 409 546 A2**

# EUROPEAN PATENT APPLICATION

(21) Application number: **90307777.4**

(22) Date of filing: **17.07.90**

(51) Int. Cl.⁵: **G01N 25/68**

(30) Priority: **17.07.89 JP 83694/89**

(43) Date of publication of application:
**23.01.91 Bulletin 91/04**

(84) Designated Contracting States:
**BE DE FR GB IT NL**

(71) Applicant: **Osaka Sanso Kogyo KK**
**Sumitomo Seimei Shin-Osaka Kita Bldg 1-14**
**Miyahara**
**4-Chome, Yodogawa-ku Osaka 532(JP)**

Applicant: **NISHIZAWA, Jun-ichi**
**6-16, Komegafukuro 1-chome**
**Sendai-shi Miyagi-Ken(JP)**

(72) Inventor: **Nishizawa, Jun-Ichi**
**6-16, Komegafukuro 1-chome**
**Sendai-shi, Miyagi-ken(JP)**
Inventor: **Tagawa, Taichi c/o Osaka Sanso**
**Kogyo KK, Sumimoto**
**Seimei, Shin-Osaka Kita Bldg, 1-14, Miyahara**
**4-Chome, Yodogawa-ku, Osaka 532(JP)**
Inventor: **Kijima, Takahiko, Osaka Sanso**
**Kogyo KK, Sumimoto**
**Seimei, Shin-Osaka Kita Bldg, 1-14, Miyahara**
**4-Chome, Yodogawa-ku, Osaka 532(JP)**

(74) Representative: **Bousfield, Roger James**
**The BOC Group plc Chertsey Road**
**Windlesham Surrey GU20 6HJ(GB)**

(54) **Apparatus for measuring the water content of a gas.**

(57) Apparatus for measuring a dew point or a frosting point in a gas at minus 80°C or lower, which comprises a casing made of heat conducting material and having secured to an internal surface thereof a mirror capable of generating dew or frost derived from the water over a wide temperature range (and in particular over the range of room temperature to the temperature of liquid nitrogen), the casing also having a window through which light can be projected to impinge on the mirror during use of the apparatus, means for heating the casing, means for cooling the temperature of the casing in the vicinity of the mirror and means for introducing the gas into the casing.

*Fig. 1*

## APPARATUS FOR MEASURING THE WATER CONTENT OF A GAS

The present invention relates to a method of measuring the water content in a gas containing a trace amount of noncondensable water content having a low dew point in the range of from room temperature to minus 80°C or lower.

With recent advances in technology, inert gases such as nitrogen, argon, hydrogen and helium which have a water content of 0.5ppm or less (a dew point of minus 80°C or lower) have been increasingly utilized. In particular, material gases and carrier gases that are used for epitaxial growth and CVD in the semiconductor industry are required to have an ultra-high purity, and there have therefore been demands for dew points below minus 80°C to be measured with a high degree of accuracy.

Apparatus is known which measures a dew or frosting point in a gas by allowing the gas to impinge on a mirror and the temperature at which dew or frost is found being measured by means of an increase in the quantity of scattered light impinging on the mirror which is scattered. Such known apparatus is not however entirely satisfactory.

In accordance with the present invention, there is provided apparatus for measuring a dew point or a frosting point in a gas at minus 80°C or lower, which comprises a casing made of heat conducting material and having secured to an internal surface thereof a mirror capable of generating dew or frost derived from the water over a wide temperature range (and in particular over the range of room temperature to the temperature of liquid nitrogen), the casing also having a window through which light can be projected to impinge on the mirror during use of the apparatus, means for heating the casing, means for cooling the temperature of the casing in the vicinity of the mirror and means for introducing the gas into the casing.

Preferably, the reflecting surface of the mirror is made of silicon, for example from a silicon wafer. Ideally, the casing is made of copper.

It has been found that the mirror can be further improved by coating the reflecting surface with aluminium. Advantageously, however, an aluminium coated reflecting surface is preferably further coated with a material which is transparent and which has high hardness, for example a thin diamond film or aluminium nitride, most preferably the latter.

In preferred embodiments, apparatus in accordance with the invention comprises:

(i) a reflecting mirror capable of generating dew or frost in a temperature range of from room temperature to the temperature of liquid nitrogen, the surface of the reflecting mirror being formed from a silicon wafer;

(ii) a copper casing for accommodating the reflecting mirror, the reflecting mirror being secured to the bottom surface of the copper casing in such a manner that adequate thermal contact is obtained therebetween;

(iii) means for cooling the bottom surface of the copper casing from room temperature to the temperature of liquid nitrogen;

(iv) means for heating the copper casing from the temperature of liquid nitrogen to room temperature;

(v) a stainless steel tube for passing the gas to be measured, the stainless steel tube extending through a wall of the copper casing, that portion of the tube which extends through the wall of the copper casing being joined to it, for example by brazing, such that the copper casing is completely hermetically sealed and, at the same time, the stainless-steel tube and the copper casing are brought into thermal contact with each other sufficiently to cool the gas flowing through the stainless steel tube from the copper casing;

(vi) the stainless steel tube having such a structure that it blows the gas within the copper casing against the reflecting mirror at or nearly at right angles;

(vii) a window provided in a portion of the copper casing other than the bottom for transmitting condensed rays of light;

(viii) a device for projecting perpendicularly or substantially perpendicularly condensed rays of light onto a portion of the reflecting mirror where dew or frost falls;

(ix) a mechanism for detecting through amplification a sudden increase in the quantity of scattered light due to deposition of condensation or frost; and

(x) a central processing unit for judging and computing a condensation point or a frosting point on the basis of the detection that is conducted by the mechanism stated in (ix).

It is preferred for the inner surface of the copper casing to be coated with a metal which is highly resistant to corrosion, advantageously through use of chromium.

It is also preferred for the inner surface of the stainless steel tube to be smoothed by polishing and to be further subjected to a passivation treatment with oxygen.

For a better understanding of the invention, the apparatus of the invention will be described below in more detail by way of exemplification only with reference to the accompanying drawings in which:

Figure 1 is a flow sheet of one preferred embodiment of the apparatus according to the invention.

Figure 2 shows a circuit of photodetectors.

Figures 3 and 4 are graphs showing the relationship between the surface temperature of the reflecting mirror and the output of the photodetector.

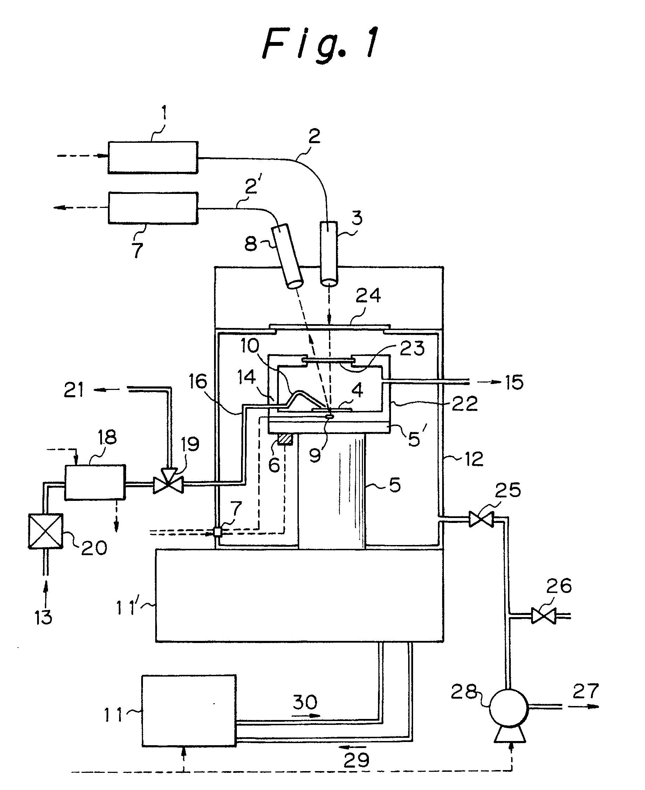

Figure 1 shows one embodiment of the present invention. A helium refrigerator is employed in the cooling system. Helium gas is circulated through a line 30, a drive mechanism 11', a refrigeration generating unit 5, the drive mechanism 11', and a line 29 by the operation of a circulating helium compressor 11. The refrigeration generating unit 5 comprises a stainless steel cylinder and either a piston or a spacer which is inserted therein. By moving the piston or spacer up and down by the action of the drive mechanism 11', refrigeration occurs on a refrigerating surface 5' at the upper end of the cylinder 5. A copper casing 22 is installed in such a manner that it comes into satisfactory thermal contact with the refrigerating surface 5'. A part of the copper casing 22 is formed from glass 23. A reflecting mirror 4 which comprises a silicon wafer having a smooth surface is installed on the bottom surface inside the copper casing 22 in such a manner that the reflecting mirror 4 comes into satisfactory thermal contact with the bottom surface. A temperature sensor 9, for example, a thermocouple or a resistance thermometer, is inserted into the bottom portion of the copper casing 22.

A sample gas the condensation point of which is to be measured is introduced from a gas inlet 13, passed through a filter 20 and first released to the outside from a gas outlet 21 through a three-way valve 19 at a predetermined flow rate under the control of an automatic flow control device 18. The higher the flow rate of the purging gas, the more quickly the sample gas line reaches equilibrium. Then, the sample gas enters the copper casing 22 through a line 16. That portion of the line 16 which extends through a wall of the copper casing 22 is constituted of a thin-walled and small-diameter stainless steel tube. Inside the copper casing 22, the stainless steel tube is first bent upward and then bent downward, as shown by reference numeral 10, so that the sample gas is blown against the reflecting mirror 4 that is installed on the bottom surface of the copper casing 22. The sample gas is then released through a gas outlet 15. With a view to obtaining quick response, it is preferable to use for the gas line that extends from the inlet 13 to the line 10 a stainless steel tube which has a diameter of 1/4", 1/8", 1/6", etc., and the inner surface of which is satisfactorily smoothed by means, for example, of electropolishing and also subjected to a passivation treatment by oxygen gas so that water is only slightly adsorbed, desorbed or released from the inside.

Meantime, light from a light-emitting diode (LED) 1 is sufficiently condensed through an optical fiber 2, further condensed through a lens 3, transmitted through glass windows 24, 23 and then applied perpendicularly to the surface of the reflecting mirror 4. Scattered light from the surface of the reflecting mirror 4 is condensed through a condenser lens 8, which is installed at an angle other than the angle of reflection of the light that is projected from the lens 3, and then sent through an optical fiber 2' to a photodetector 7 which detects a sudden increase in the quantity of scattered light to judge the temperature at that time, which is measured by the temperature sensor 9, to be a condensation point or a frosting point. At the same time as the dew point or frosting point is reached, the circulating helium compressor 11 is suspended, and a heater 6 is switched on to heat the reflecting mirror 4.

Low-temperature members or portions, such as the copper casing 22, the refrigeration generating unit 5 of the helium refrigerator and the refrigerating surface 5', must be thermally insulated from the ambient air and are therefore isolated by a hermetically sealed chamber 12 that includes the glass window 24 and an electric wire connector 7, the chamber 12 being evacuated by an evacuation system which includes vacuum valves 25, 26 and a vacuum pump 28, thereby realising heat insulation.

An important point of this embodiment resides in the roles of the portion 14 where the sample gas that is supplied through the stainless steel tube 16 passes through the wall of the copper casing 22, and the nozzle 10. The stainless steel tube 16 is brazed to the copper casing 22 by using a solder containing silver so that no leakage of gas will occur. At the portion 14, the sample gas flowing through the stainless steel tube 16 is precooled by the heat conduction between the metals. Also the stainless steel nozzle 10 inside the copper casing 16, the sample gas within the stainless steel tube is precooled to several degrees centigrade, which is measured by the temperature sensor 9, by the heat transfer and heat radiation from the gas within the casing 22 in a case where the nozzle 10 has a predetermined size, preferably a diameter of 1/16" and a length of 40 mm. Thus, the sample gas is blown against the reflecting mirror 4 after being precooled in this way. It is, as a matter of course, possible to enhance the precooling effect by winding one turn of the stainless steel tube 16 around the copper casing 22. This is an effective means when the gas flow velocity is relatively low.

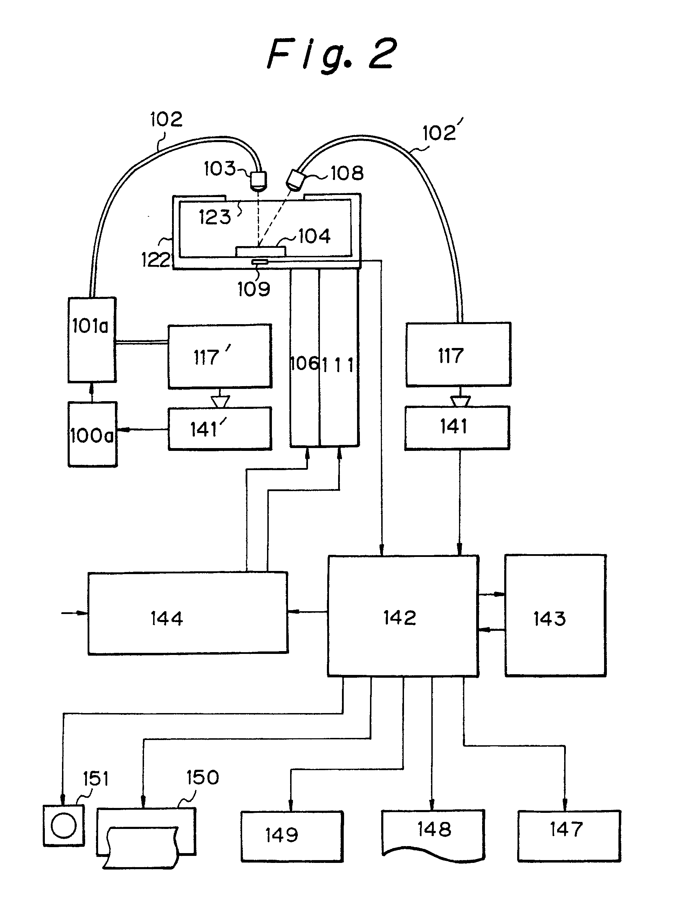

Figure 2 shows another embodiment of the present invention, in which the measurement of a dew point is conducted using a computer. A measuring chamber 122 and the surface of the reflecting mirror 104 are cooled by a helium refrigerator 111. In this apparatus, light from a light-emitting diode 101 is transmitted to a condenser lens 103 through an optical fiber 102 and condensed by the lens 103 before being applied to the surface of the reflecting mirror 104. The applied light is reflected from the surface of the reflecting mirror 104, and very small part of the light is scattered and detected by a photodetector 117 through a condenser lens 108 and an optical fiber 102'.

A gas to be measured is blown from a nozzle (not shown) against the surface of the reflecting mirror 104, and when a trace amount of water content in the gas condenses to form dew on the surface of the reflecting mirror 104, the quantity of light scattered at the surface of the mirror 104 suddenly increases. The scattered light is condensed by the lens 108 and detected by the photodetector 117 through the optical fiber 102'. Since the output level of the photodetector 117 is low, particularly low when the dew point is relatively low, the output of the photodetector 117 is amplified in an amplifier 141. The output of the amplifier 141 is supplied to a CPU 143 through an interface 142. If the light-emitting diode 101 has a noise, this noise is also amplified in the amplifier 141, and this causes misreading of the signal. To eliminate such noise, a feedback circuit which comprises a photodetector 117', an amplifier 141' and a noise eliminator 100 is provided. More specifically, part of the light energy from the light-emitting diode 101 is supplied to the photodetector 117', which is equivalent to the photodetector 117. The output of the photodetector 117' is supplied to and amplified in the amplifier 141', which is equivalent to the amplifier 141, and the amplifier output is supplied to the noise eliminator 100. The noise eliminator 100 feeds back an output corresponding to the level of noise to the light-emitting diode 101, thereby eliminating the noise from the light-emitting diode 101. As a result, only an output that is generated from the scattered light can be accurately taken out, and it is therefore possible to lower the limit of detection of dew points. The temperature of the surface of the reflecting mirror 104 is detected by a temperature sensor 109 and supplied to the CPU 143 though a thermometer 109' and an interface 142. The CPU 143 calculates the mirror surface temperature signal from the temperature sensor 109 and the output from the photodetector 117 and provides signals which are suitable for the respective display means to a digital indicator 147, a printer 148, an analog display 150 and a display unit 149. A controller 144 controls each element of the measuring apparatus. For example, when the measurement of a condensation point is completed, the controller 114 delivers a signal to suspend the helium refrigerator 111 and activates a heater 106, thereby causing the condensation and frost to vanish from the surface of the reflecting mirror 104. Upon completion of the condensation point measurement, the controller 144 delivers a signal to an alarm device 151 to give the alarm.

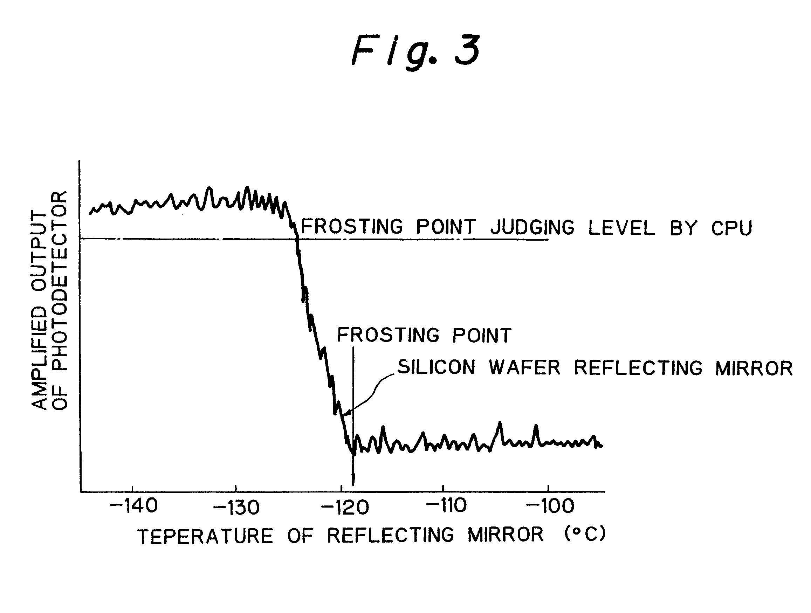

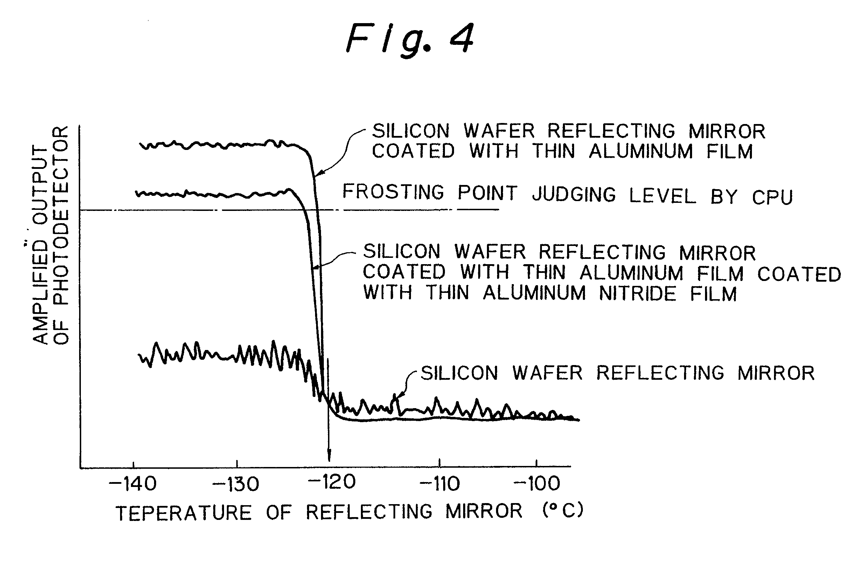

Figures 3 and 4 are graphs for explanation of noise, each showing the relationship between the temperature of the reflecting mirror and the wavelength of scattered light that is amplified by the photodetector.

It is considerably difficult to judge automatically and accurately whether or not a frosting point has been reached by use of a CPU. Even if noise is removed in advance by use of a noise eliminator, for a low condensation point, ie minus 118°C, it is impossible to discriminate from noise a sudden increase in the quantity of scattered light due to deposition of condensation unless there is an increase in the quantity of scattered light that is several to 10 times the amplitude of noise which is left unremoved. Figure 3 shows the amplified outputs that are obtained by the apparatus shown in Figures 1 and 2, wherein a silicon wafer is used as a reflecting mirror. The level that is shown by the one-dot chain line is the limit of detection of a dew point by use of a CPU.

It is considered that the noise is caused due to the fact that the silicon wafer, which is used as a reflecting mirror, has a relatively high absorption coefficient, although it is superior in the surface smoothness. To eliminate this disadvantage, a thin film of aluminium was deposited on the silicon wafer by evaporation or sputtering. As a result, it was possible to obtain a satisfactorily high S/N ration even at minus 122°C, as shown in Figure 4. Figure 4 not only shows the comparison between different kinds of silicon wafer reflecting mirrors but also reveals that at minus 122°C it is considerably difficult to discriminate between a frosting point and noise using a CPU because of a small S/N ratio. However, in a silicon wafer reflecting mirror formed with a thin aluminium film, the reflectivity lowered to 60% within 2 to 3 hours, and almost all the thin aluminium film had been separated after 100 hours had elapsed. This reveals that a soft metal such as aluminium cannot maintain a good reflecting surface against high-hardness fine alumina and silica particles contained in the gas blown out from the nozzle, oxide particles, such as Fe, Ni, Cr, Cu, etc, which come out of the piping, and fine crystals of ice.

To solve this problem, it is considered to coat the thin aluminium film with a material which is transparent and has a high hardness, for example, a thin diamond film, aluminium nitride, etc. It is an economical and readily practicable method to employ a thin aluminium nitride film as a protective film. A silicon wafer reflecting mirror employing a thin aluminium nitride film is similarly shown in Figure 4. In this case, the S/N ratio becomes somewhat lower than in the case of a thin aluminium film alone, ie, about 98% of the S/N ratio in the case of a thin aluminium film alone for light having a wavelength of 633 nm from an LED, and about 93% for light having a wavelength of 780 nm from a semiconductor laser used as a light source. However, it is possible to obtain a satisfactorily high S/N ratio. Moreover, it has been confirmed that the thin aluminium film coated with a thin aluminium nitride film endures a continuous use for 10,000 hours or more. A thin aluminium nitride film can be deposited on a thin aluminium film by evaporating aluminium in a vacuum on the surface of a silicon wafer which has been thoroughly polished at the {111} or {100} plane of cleaved silicon crystal, or coating a thin aluminium film on the surface of such a silicon wafer by carrying out sputtering in argon under a reduced pressure, and further carrying out sputtering of aluminium in $N_2$ on the thin aluminium film. The surface of a reflecting mirror produced in this way functioned as an ideal protective film for the surface of the reflecting mirror since the thin aluminium nitride film had a high degree of hardness and high transparency. In order to effectively measure a very small water content on the basis of a frosting point at a temperature of minus 80° C or lower, it is essential to apply condensed light to a position on the mirror surface where a gas to be measured is blown from the nozzle. The results of an experiment conducted by the present inventors in which measurement was carried out with regard to the angle of incidence of light in various conditions revealed that, the closer to 90° to the mirror surface, the higher the sensitivity with which a sudden change in the quantity of scattered light is read. The results of an experiment in which a light-emitting diode was used as a light source revealed that, the closer to 90° to the mirror surface, the higher the sensitivity. This shows that, the closer to 90°, the more effectively the light is condensed and applied to the mirror surface. The angle of incidence is preferably not greater than 60°, particularly preferably not greater than 10°.

In order to enable measurement of a very small amount of water content, it is also important to heat the sampling piping by means of a heater. It is particularly important in order to accurately measure a very small amount of water content by the dew (frosting) point method to heat the sampling piping near 200° C, together with a filter which is capable of eliminating particles flowing together with the sample gas, thereby constantly maintaining the sampling piping and other elements in the system in conditions where a minimal amount of adsorbed water content is present.

As has been described above in detail, it is possible to automatically and accurately measure the water content of a gas having a low condensation point in the range of from room temperature to minus 80° C or lower by employing a precooling section which cools a gas to be measured before it is blown against a mirror surface, a nozzle which blows the precooled gas against the mirror surface, and rays of light condensed as much as possible, which are used as a light source that is projected onto the mirror surface, and by detecting the condition of water content condensed or frozen on the mirror surface.

## Claims

1. Apparatus for measuring a dew point or a frosting point in a gas at minus 80° C or lower, which comprises a casing made of heat conducting material and having secured to an internal surface thereof a mirror capable of generating dew or frost derived from the water over a wide temperature range (and in particular over the range of room temperature to the temperature of liquid nitrogen), the casing also having a window through which light can be projected to impinge on the mirror during use of the apparatus, means for heating the casing, means for cooling the temperature of the casing in the vicinity of the mirror and means for introducing the gas into the casing.

2. Apparatus according to Claim 1 in which the reflecting surface of the mirror is made of silicon.

3. Apparatus according to claim 2 in which the reflecting surface is coated with aluminium.

4. Apparatus according to Claim 3 in which the reflecting surface is further coated with a transparent film or high hardness.

5. Apparatus according to Claim 5 in which the transparent film comprises aluminium nitride.

6. Apparatus according to any preceding claim which comprises:

(i) a reflecting mirror capable of generating dew or frost in a temperature range of from room temperature to the temperature of liquid nitrogen, the surface of the reflecting mirror being formed from a silicon wafer;

(ii) a copper casing for accommodating the reflecting mirror, the reflecting mirror being secured to the bottom surface of the copper casing in such a manner that adequate thermal contact is obtained therebetween;

(iii) means for cooling the bottom surface of the copper casing from room temperature to the temperature of liquid nitrogen;

(iv) means for heating the copper casing from the temperature of liquid nitrogen to room temperature;

(v) a stainless steel tube for passing the gas to be measured, the stainless steel tube extending through a wall of the copper casing, that portion of the tube which extends through the wall of the copper casing being joined to it, for example brazing, such that the copper casing is completely hermetically sealed and, at the same time, the stainless steel tube and the copper casing are brought into thermal contact with each other sufficiently to cool the gas flowing through the stainless steel tube from the copper casing;

(vi) the stainless steel tube having such a structure that it blows the gas within the copper casing against the reflecting mirror at or nearly at right angles;

(vii) a window provided in a portion of the copper casing other than the bottom for transmitting condensed rays of light;

(viii) a device for projecting perpendicularly or substantially perpendicularly condensed rays of light onto a portion of the reflecting mirror where dew or frost falls;

(ix) a mechanism for detecting through amplification a sudden increase in the quantity of scattered light due to deposition of condensation or frost; and

(x) a central processing unit for judging and computing a condensation point or a frosting point on the basis of the detection that is conducted by the mechanism stated in (ix).

7. Apparatus according to Claim 6 in which the inner surface of the copper casing is coated with a metal which is highly resistant to corrosion.

8. Apparatus according to Claim 7 in which the metal is chromium.

9. Apparatus according to any one of Claims 6 to 8 in which the inner surface of the stainless steel tube is smoothed by polishing and further subjected to a passivation treatment with oxygen.

# Fig. 1

# Fig. 2

*Fig. 3*

FROSTING POINT JUDGING LEVEL BY CPU

FROSTING POINT

SILICON WAFER REFLECTING MIRROR

AMPLIFIED OUTPUT OF PHOTODETECTOR

TEPERATURE OF REFLECTING MIRROR (°C)

-140    -130    -120    -110    -100

# Fig. 4

SILICON WAFER REFLECTING MIRROR
COATED WITH THIN ALUMINUM FILM

FROSTING POINT JUDGING LEVEL BY CPU

SILICON WAFER REFLECTING MIRROR
COATED WITH THIN ALUMINUM FILM COATED
WITH THIN ALUMINUM NITRIDE FILM

SILICON WAFER REFLECTING MIRROR

AMPLIFIED OUTPUT OF PHOTODETECTOR

−140  −130  −120  −110  −100

TEPERATURE OF REFLECTING MIRROR (°C)

EP 0 409 546 A2